# FASCICULE DE BREVET EUROPEEN

(11) **EP 1 966 478 B1**
(45) Date de publication et mention de la délivrance du brevet: **28.07.2010**
(21) Numéro de dépôt: 06808309.6
(22) Date de dépôt: 12.09.2006
(51) Int. Cl.: F02M 35/12, F02M 35/10

(54) **ENSEMBLE COMPORTANT UN DISPOSITIF D'ATTENUATION DES BRUITS ET UN CONDUIT D'AIR D'UN BLOC MOTEUR RACCORDES DE MANIERE ETANCHE PAR ENCLIQUETAGE**
EINE GERÄUSCHDÄMPFENDE VORRICHTUNG UND EINEN MOTOREINHEITSLUFTKANAL, DIE DURCH EINEN RASTMECHANISMUS ABGEDICHTET VERBUNDEN SIND, UMFASSENDE ANORDNUNG
ASSEMBLY COMPRISING A NOISE ATTENUATING DEVICE AND AN ENGINE UNIT AIR DUCT SEALINGLY CONNECTED BY CLICK-STOP MECHANISM

(30) Priorité: 12.09.2005 FR 0509253
(43) Date de publication de la demande: 10.09.2008
(73) Titulaire: RENAULT S.A.S., 92100 Boulogne Billancourt (FR)
(72) Inventeur: DAMOISEAU, Eric, F-78780 Maurecourt (FR); BLANQUET, Philippe, F-92240 Malakoff (FR)
(86) Numéro de dépôt international: PCT/FR2006/050871
(87) Numéro de publication internationale: WO 2007/031680

(56) Documents cités:
- EP-A- 0 995 895
- FR-A- 2 658 899
- US-A1- 2001 035 096
- US-B1- 6 213 077
- PATENT ABSTRACTS OF JAPAN vol. 2003, no. 12, 5 décembre 2003 (2003-12-05) -& JP 2005 188440 A (MAHLE TENNEX CORP), 14 juillet 2005 (2005-07-14)
- PATENT ABSTRACTS OF JAPAN vol. 2003, no. 12, 5 décembre 2003 (2003-12-05) -& JP 2003 328883 A (MITSUBISHI ELECTRIC CORP), 19 novembre 2003 (2003-11-19)
- PATENT ABSTRACTS OF JAPAN vol. 015, no. 264 (M-1132), 4 juillet 1991 (1991-07-04) -& JP 03 088952 A (TOYODA GOSEI CO LTD), 15 avril 1991 (1991-04-15)
- PATENT ABSTRACTS OF JAPAN vol. 2000, no. 04, 31 août 2000 (2000-08-31) -& JP 2000 002161 A (SAKAMOTO INDUSTRY CO LTD;), 7 janvier 2000 (2000-01-07)
- PATENT ABSTRACTS OF JAPAN vol. 2003, no. 12, 5 décembre 2003 (2003-12-05) -& JP 2003 254182 A (MARUGO RUBBER IND CO LTD), 10 septembre 2003 (2003-09-10)
- PATENT ABSTRACTS OF JAPAN vol. 1996, no. 09, 30 septembre 1996 (1996-09-30) -& JP 08 121274 A (TOYOTA MOTOR CORP), 14 mai 1996 (1996-05-14)
- PATENT ABSTRACTS OF JAPAN vol. 1995, no. 09, 31 octobre 1995 (1995-10-31) -& JP 07 158529 A (TOYODA GOSEI CO LTD), 20 juin 1995 (1995-06-20)
- PATENT ABSTRACTS OF JAPAN vol. 2003, no. 12, 5 décembre 2003 (2003-12-05) -& JP 2003 269272 A (DENSO CORP), 25 septembre 2003 (2003-09-25)

## Description

### DOMAINE TECHNIQUE AUQUEL SE RAPPORTE L'INVENTION

La présente invention concerne de manière générale les ensembles qui comportent un dispositif d'atténuation des bruits à raccorder de manière étanche à un conduit d'air d'un bloc moteur de véhicule automobile.

Elle concerne plus particulièrement un ensemble selon les caractéristiques du préambule de la revendication 1.

L'invention trouve une application particulièrement avantageuse dans la réalisation d'un raccord étanche entre un résonateur et un conduit de la ligne d'admission d'air.

### ARRIÈRE-PLAN TECHNOLOGIQUE

Les moteurs à combustion interne utilisent en admission, pour la combustion de carburant, soit un mélange d'air frais et de gaz brûlés, soit uniquement de l'air frais. Cet air frais est généralement véhiculé vers le moteur par une ligne d'admission d'air qui le prélève dans l'atmosphère puis le filtre au moyen d'un filtre à air avant de le diriger vers les conduits d'admission de chacun des cylindres du moteur. La régulation d'air frais dans chacun de ces cylindres est réalisée au moyen de soupapes d'admission.

En fonctionnement, des fluctuations de pression sont générées par le moteur et les soupapes d'admission dans la ligne d'admission d'air. Ces fluctuations de pression créent, dans une large bande de fréquences, des bruits communément appelés « bruits de bouche ». Ces bruits de bouche peuvent comporter, pour certaines fréquences, une amplitude importante qui excède les normes prescrites.

On constate que l'apport d'un dispositif, tel qu'un résonateur, constitué d'une ou plusieurs chambres de tailles diverses communiquant par des ouvertures avec un conduit de la ligne d'admission d'air, permet d'atténuer ces bruits dans d'étroites bandes de fréquences fonction des tailles des chambres.

Généralement, les résonateurs sont rapportés sur ce conduit au moyen de vis de fixation dont les têtes prennent appui sur le résonateur et dont les corps filetés sont vissés dans des puits taraudés prévus sur le conduit.

L'inconvénient principal d'un tel ensemble est que son assemblage et son démontage nécessitent un temps important. Par conséquent, un tel ensemble ne peut être disposé au-dessus d'une batterie du véhicule automobile puisque l'accessibilité à cette dernière doit être simple et rapide.

On connaît par ailleurs du document JP 2005 188440 un résonateur à rapporter sans outil spécifique sur un conduit d'admission d'air d'un bloc-moteur de véhicule automobile. Ce conduit d'admission d'air comporte à cet effet une ouverture latérale à partir de laquelle s'élève une couronne munie de dents d'encliquetage. Le résonateur présente quant à lui une forme de boîte dont l'une des faces comporte une ouverture bordée intérieurement d'un manchon à engager sur ladite couronne, et présente quatre fenêtres d'accueil des dents d'encliquetage de cette couronne.

On connaît également du document JP 03 088962 un dispositif similaire comportant un résonateur rapporté sur un conduit d'admission d'air. Ce conduit d'admission d'air comporte une ouverture latérale et deux languettes qui s'étendent de part et d'autre de cette ouverture latérale et qui sont chacune pourvues d'une fenêtre le résonateur présente une forme de boîte dont la face supérieure présente une ouverture bordée par une couronne à engager dans l'ouverture du conduit d'admission d'air. Pour sa fixation au conduit d'admission d'air le résonateur comporte deux dents d'encliquetage adaptées à venir s'accrocher aux fenêtre des deux languettes.

Le document US 2001 035096 décrit un filtre à air d'une ligne d'admission d'air d'un moteur à combustion interne, équipé d'un résonateur. Ce filtre à air se présente sous la forme d'une boîte parallélépipédique. Sa paroi de fond délimite, avec une paroi incurvée rapportée sur elle, un conduit d'admission d'air. L'une de ses parois latérales forme une glissière dans laquelle coulisse le résonateur. Un pion creux, présentant une pluralité d'ouvertures latérales, s'élève à partir de la paroi incurvée de la boîte et s'engage au travers d'une ouverture prévue en correspondance au fond du résonateur, de telle manière que le conduit d'admission d'air communique avec le résonateur.

Dans ces documents, les dispositifs d'aténuation des bruits nécessitent pour leur montage un espace libre important.

### OBJET DE L'INVENTION

Afin de remédier à l'inconvénient précité de l'état de la technique, la présente invention propose un ensemble dont l'assemblage est simple et rapide.

Plus particulièrement, on propose selon l'invention un ensemble selon les caractèristiques de la revendication 1.

Ainsi, selon l'invention, les moyens de fixation ne comprennent pas de vis. En conséquence, le dispositif d'atténuation des bruits peut être rapporté sur le conduit d'air rapidement et précisément sans nécessiter aucun outillage, en exerçant une simple pression sur le dispositif d'atténuation des bruits pour l'encliqueter sur le conduit d'air.

Le dispositif d'atténuation des bruits peut en particulier être rapporté sur le conduit d'air par un simple coulissement du dispositif d'atténuation des bruits sur le conduit d'air afin de centrer l'une en face de l'autre les ouvertures que comportent les deux pièces. Cette manipulation ne nécessite donc pas pas un volume de travail important, réduisant alors l'espace consacré à l'assemblage et au démontage de ce dispositif.

Cet ensemble peut par exemple, afin de diminuer l'encombrement global du bloc moteur, être disposé au-dessus de la batterie du véhicule automobile sans gêner l'accessibilité à cette dernière.

Par ailleurs, la disposition du joint évite, lors du montage, tout frottement inutile qui augmenterait sensiblement l'effort nécessaire au montage des deux pièces et qui détériorerait le joint. En effet lors du coulissement du dispositif' d'atténuation des bruits sur le conduit d'air, le joint est disposé sur une surface oblique par rapport à la direction de glissement, il ne prend donc appui sur une surface en vis-à-vis, elle aussi oblique qu'en fin d'assemblage. Par ailleurs, cette disposition des ouvertures permet de créer, en fin d'assemblage, une force de pression de part et d'autre des deux faces du joint afin d'assurer une bonne étanchéité à l'ensemble. En effet si cet angle de plan de joint était nul, le joint circulaire coulisserait le long du conduit d'air sans pouvoir être mis en pression contre lui.

Enfin, lors de l'assemblage et du démontage de l'ensemble, le joint reste fixé et centré sur l'une des deux pièces. Par ailleurs, l'angle de plan de joint est adapté au matériau du joint, et par conséquent à son coefficient d'adhérence, de sorte que le joint puisse, en fin de montage, coulisser sur l'autre des deux pièces sans nécessiter un effort d'assemblage trop important. Ainsi, l'assemblage des deux pièces peut être réalisé manuellement "à la chaîne".

Selon une première caractéristique avantageuse de l'ensemble conforme à l'invention, chaque logement forme une butée de fin de course d'assemblage.

Préférentiellement, les surfaces de glissement sont en partie portées par des coulisseaux aptes à coulisser les uns dans les autres selon l'axe d'assemblage.

Avantageusement, un coulisseau est disposé de chaque côté de chaque ouverture des pièces.

Ainsi, le joint circulaire est correctement maintenu en pression sur l'ensemble de sa circonférence.

Par ailleurs, les deux pièces comprennent des repères de fin d'assemblage.

Ainsi, l'installateur peut visuellement déterminer si les deux pièces sont correctement assemblées en vérifiant que les repères de fin d'assemblage sont disposés en vis-à-vis.

Selon une première application avantageuse de l'invention, le dispositif d'atténuation des bruits constitue un résonateur et le conduit d'air constitue un des conduits d'une ligne d'admission d'air du bloc moteur de véhicule automobile.

Selon une autre application avantageuse de l'invention, le dispositif d'atténuation des bruits constitue un résonateur et le conduit d'air constitue un plenum d'une ligne d'admission d'air du bloc moteur de véhicule automobile.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue éclatée en perspective d'un premier mode de réalisation d'un ensemble selon l'invention comprenant un résonateur et un conduit d'air ;
- la figure 2 est une vue schématique de détail de la zone II de la figure 1; et
- la figure 3 est une vue schématique en perspective selon la direction F du résonateur de la figure 1

En préliminaire, on notera que les éléments identiques ou similaires des différents modes de réalisation représentés sur les différentes figures seront, dans la mesure du possible, référencés par les mêmes signes de référence et ne seront pas décrits à chaque fois.

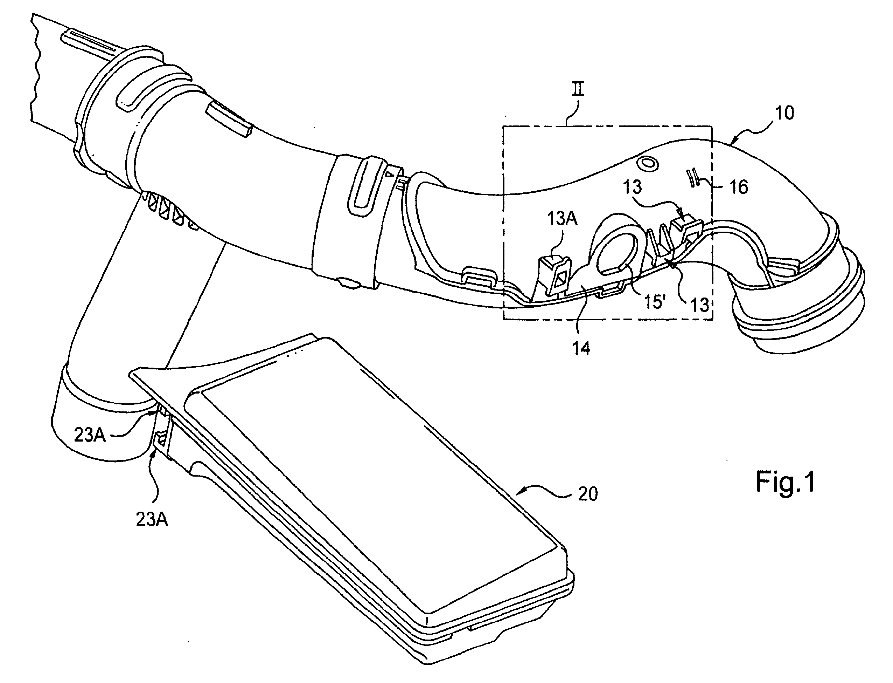

Sur les figures 1 à 3, on a représenté un ensemble 1 selon l'invention.

L'ensemble 1 comporte deux pièces, un conduit d'air 10 d'une ligne d'admission d'air d'un moteur à combustion interne, ici un conduit en amont d'un filtre à air de la ligne d'admission d'air, et un dispositif d'atténuation des bruits 20, ici un résonateur 20.

En variante, on pourrait prévoir que le conduit d'air constitue un plenum, c'est-à-dire un volume d'air du répartiteur d'air du moteur à combustion interne.

Les deux pièces 10,20 comportent chacune une ouverture 15,25 à raccorder l'une avec l'autre de manière étanche à l'aide de moyens de fixation.

Selon le mode de réalisation représenté, le conduit d'air 10 présente une section sensiblement circulaire et est percé, sur sa face latérale, de l'ouverture 15 circulaire. Cette ouverture 15 débouche sur une surface plane 14.

Le résonateur 20 est quant à lui un boîtier de forme sensiblement parallélépipédique dont l'une des deux petites faces, la face avant, est percée de l'ouverture 25 circulaire.

Le raccordement étanche des deux ouvertures 15,25 est réalisé au moyen d'un joint circulaire 30 moulé sur la périphérie de l'ouverture 25 du résonateur 20 et destiné à prendre appui sur la surface plane 14 du conduit d'air 10.

Selon une caractéristique particulièrement avantageuse de l'invention, les moyens de fixation des deux pièces 10,20 comprennent des moyens de centrage des ouvertures 15,25 et des moyens d'encliquetage.

Ces moyens de centrage comportent sur chacune des deux pièces 10,20 au moins une surface de glissement 12,12A,12B,22. Lesdites surfaces de glissement sont en partie portées par des coulisseaux 13,13A,23,23A disposés de part et d'autre des ouvertures 15,25 des deux pièces 10,20. Ces coulisseaux 13,13A,23,23A sont destinés à coopérer ensemble afin de permettre aux deux pièces 10,20 de coulisser l'une sur l'autre jusqu'à une position dans laquelle lesdites ouvertures 15,25 sont précisément disposées en vis-à-vis l'une de l'autre.

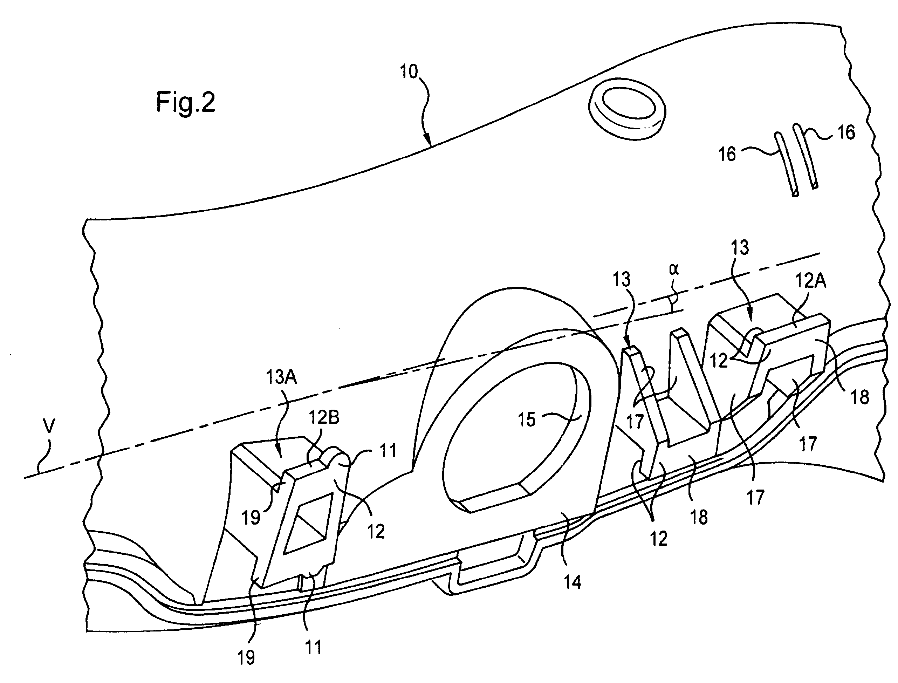

Plus précisément, comme le montre la figure 2, le conduit d'air 10 porte, d'un côté de son ouverture 15, deux coulisseaux 13 juxtaposés selon l'axe V du conduit d'air 10. Ces deux coulisseaux 13 font saillies de la face latérale du conduit d'air 10 et comprennent chacun deux nervures de renforcement 17 parallèles et en vis-à-vis reliées par un rebord 18 transversal. Les nervures de renforcement 17 et les rebords 18 transversaux des deux coulisseaux 13 s'étendent dans des directions opposées.

Chaque rebord 18 transversal est situé en avant de la surface plane 14 de l'ouverture 15 et forme un rail dont les surfaces latérales 12 et la surface supérieure 12A constituent lesdites surfaces de glissement 12,12A.

Par ailleurs, le conduit d'air 10 porte, de l'autre côté de l'ouverture 15, un autre coulisseau 13A qui fait saillie de sa face latérale. Cette saillie, de section carrée, présente une extrémité plane comportant deux rebords 19 s'étendant dans des directions opposées.

Ces deux rebords 19 sont situés en avant de la surface plane 14 et forment eux aussi des rails dont les surfaces latérales 12 et la surface supérieure 12B constituent lesdites surfaces de glissement 12,12B.

Les rebords 18,19 des coulisseaux 13,13A sont tous parallèles à l'axe V. Cet axe V constitue donc l'axe de montage des deux pièces 10,20.

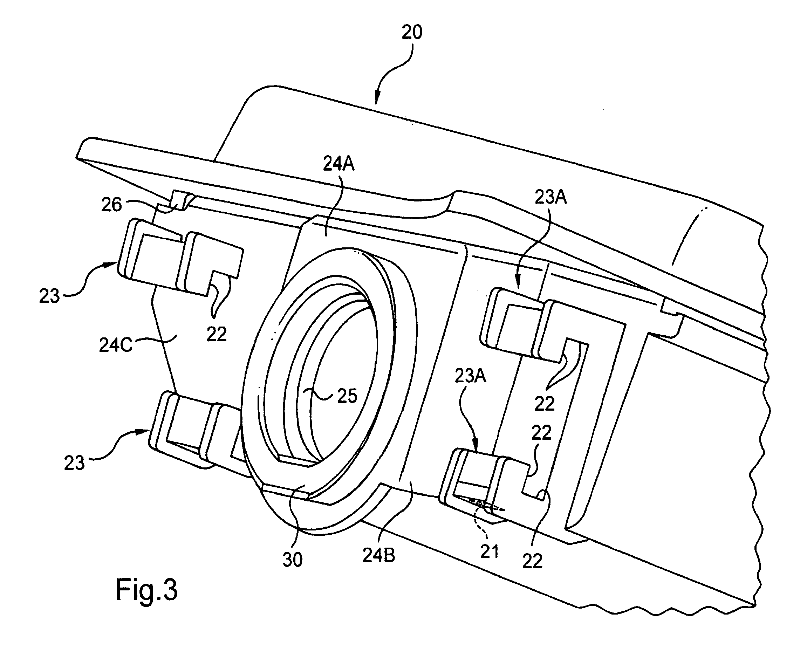

Comme le montre la figure 3, le résonateur 20 porte, de part et d'autre de son ouverture 25, quatre coulisseaux 23,23A formant des glissières dans lesquelles sont destinés à coulisser les rails formés par les coulisseaux 13,13A portés par le conduit d'air 10.

Chaque coulisseau 23,23A comprend un corps faisant saillie de la face avant du résonateur 20 et formant un coude dont la face arrière, en regard de la face avant du résonateur 20, constitue la surface de glissement 22 destinée à glisser sur les surfaces de glissement 12,12A,12B du conduit d'air 10.

Par ailleurs, la face avant du résonateur 20 présente trois surfaces planes, une surface centrale 24A portant l'ouverture centrale 25, une première surface latérale 24B portant deux coulisseaux 23A destinés à coopérer avec le coulisseau 13A du conduit d'air 10, et une seconde surface latérale 24C portant deux coulisseaux 23 destinés à coopérer avec les coulisseaux 13 du conduit d'air 10. Ces deux surfaces latérales 24B,24C constituent également des surfaces de glissement 22.

Les glissières et les rails formés par les coulisseaux 13,13A,23,23A permettent de positionner correctement le résonateur 20 sur le conduit d'air 10 afin de centrer leurs ouvertures 15,25 l'une en face de l'autre.

Par ailleurs, les moyens d'encliquetage destinés à maintenir le résonateur 20 dans cette position par rapport au conduit d'air 10 comprennent, sur chacune des surfaces de glissement 12B du coulisseau 13A du conduit d'air 10, un renflement qui constitue un doigt d'encliquetage 11. Ces doigts d'encliquetage 11 sont destinés à s'insérer dans des logements 21 prévus dans les coulisseaux 23A du résonateur 20.

Les logements 21 sont des ouvertures de section carrée réalisées dans la face des coulisseaux 23A destinée à glisser contre les surfaces supérieures 12B du coulisseau 13A. Ces ouvertures présentent trois faces latérales droites et une face latérale chanfreinée. Cette face latérale chanfreinée permet aux doigts d'encliquetage 11 d'entrer sans effort dans les logements 21 et d'en ressortir au moyen d'un effort maîtrisé. En outre, la face droite de l'ouverture disposée en regard de cette face chanfreinée forme une butée de fin de course d'assemblage pour chaque doigt d'encliquetage 11, évitant ainsi que le résonateur 20 ne puisse coulisser sur le conduit d'air 10 au-delà de la position dans laquelle les ouvertures 15,25 sont en vis-à-vis.

Le conduit d'air 10 porte par ailleurs sur sa face latérale deux nervures 16 disposées orthogonalement à l'axe V du conduit d'air 10 entre lesquelles est définie une rainure. Le résonateur 20 porte quant à lui sur sa face avant un ergot 26 destiné à être disposé en vis-à-vis de cette rainure lorsque les ouvertures 15,25 se trouvent en regard. Ces nervures 16 et cet ergot 26 forment alors des repères de fin d'assemblage.

Par ailleurs, les surfaces planes 14,24A portant les ouvertures 15,25 sont inclinées par rapport à l'axe V d'un angle de plan de joint. Plus précisément, la surface centrale 24A est inclinée d'un angle par rapport aux surfaces latérales 24B,24C et la surface plane 14 du conduit d'air 10 est inclinée par rapport à l'axe de ce conduit d'un angle très proche en fonction de la mise au point. Les surfaces sont donc adaptées à se mettre progressivement en contact afin d'éviter un ressenti de collage franc entre le joint circulaire 30 et la surface plane 14.

Cet angle de plan de joint est adapté à permettre le glissement et la mise en pression du joint circulaire 30 sur la surface plane 14 du conduit d'air 10. Le joint circulaire 30 étant ici en caoutchouc, l'angle choisi est sensiblement égal à 5°.

Pour le montage de l'ensemble 1, on amène le résonateur 20 près du conduit d'air 10 et on le translate selon l'axe V de sorte que les rails formés par les coulisseaux 13,13A du conduit d'air 10 s'insèrent dans les glissières formées par les coulisseaux 23,23A et les surfaces latérales 24B,24C du résonateur 20.

A la fin de cette translation, le joint circulaire 30 vient en contact de la surface plane 14 du conduit d'air 10, il coulisse quelque peu sur cette surface plane 14 jusqu'à ce que l'ouverture 25 du résonateur 20 soit précisément disposée en regard de l'ouverture 15 du conduit d'air 10. Lors de ce coulissement, le joint circulaire 30 est progressivement mis en pression au moyen d'un effort mesuré appliqué sur le résonateur 20. Cet effort ne doit en effet généralement pas dépasser 30 Newton de manière à ne pas excéder les normes prescrites.

A la fin du montage de l'ensemble 1, les doigts d'encliquetage 11 du conduit d'air 10 s'insèrent dans les logements 21 des coulisseaux 23A du résonateur 20 et viennent en butée contre eux. L'installateur peut alors vérifier que l'ensemble 1 est correctement monté en constatant visuellement que les repères de fin d'assemblage 16,26 sont bien en vis-à-vis les uns des autres.

Le démontage de l'ensemble 1 nécessite quant à lui un effort important pour sortir le doigt d'encliquetage 11 de son logement 21 afin d'éviter que le résonateur 20 ne se démonte accidentellement.

## Revendications

1. Ensemble (1) comportant deux pièces (10,20), un conduit d'air (10) d'un bloc moteur de véhicule automobile et un dispositif d'atténuation des bruits (20), pourvues chacune d'au moins une ouverture (15,25) à raccorder de manière étanche par un joint circulaire (30) et à assembler l'une avec l'autre à l'aide de moyens de fixation comprenant sur chacune des deux pièces (10,20) au moins une surface de glissement (12,22;12',22'), lesdites surface de glissement (12,22:12',22') étant planes et possédant un axe d'assemblage (V) commun pour pouvoir glisser l'une sur l'autre,
**caractérisé en ce que** lesdits moyens de fixation comprennent , sur l'une des deux pièces (10,20), au moins un doigt d'encliquetage (11,21') apte à s'encliqueter dans un logement (21,11') compris sur l'autre des deux pièces (10,20) et
**en ce que** le joint circulaire (30) étant solidaire de l'une des deux pièces (10,20), le plan du joint circulaire (30) et l'axe d'assemblage (V) décrivent un angle de plan de joint non nul adapté à permettre le glissement du joint circulaire (30) sur l'autre des deux pièces (10,20).

2. Ensemble (1) selon la revendication 1, **caractérisé en ce que** chaque logement (21,11') forme une butée de fin de course d'assemblage.

3. Ensemble (1) selon l'une des revendications 1 et 2, **caractérisé en ce que** les surfaces de glissement (12,22) sont en partie portées par des coulisseaux (13,13A,23,23A) aptes à coulisser les uns dans les autres selon l'axe d'assemblage (V).

4. Ensemble (1) selon la revendication 3, **caractérisé en ce qu'**un coulisseau (13,13A,23,23A) est disposé de chaque côté de chaque ouverture (15,25) des pièces (10,20).

5. Ensemble (1) selon l'une des revendications 1 à 4, **caractérisé en ce que** les deux pièces (10,20) comprennent des repères de fin d'assemblage (16,26).

6. Ensemble (1) selon l'une des revendications 1 à 5, **caractérisé en ce que** le dispositif d'atténuation des bruits (20) constitue un résonateur (20) et le conduit d'air (10) constitue un des conduits d'une ligne d'admission d'air du bloc moteur de véhicule automobile.

7. Ensemble (1) selon l'une des revendications 1 à 5, **caractérisé en ce que** le dispositif d'atténuation des bruits (20) constitue un résonateur (20) et le conduit d'air (10) constitue un plenum (10) d'une ligne d'admission d'air du bloc moteur de véhicule automobile.

## Claims

1. Assembly (1) comprising two components (10, 20), an air duct (10) of a motor vehicle engine unit and a noise-attenuation device (20), these each being provided with at least one opening (15, 25) that is to be connected in a fluid tight manner using a circular seal (30) and that are to be assembled with one another using fixing means comprising, on each of the two components (10, 20), at least one sliding surface (12, 22; 12', 22'), the said sliding surfaces (12, 22; 12', 22') being planar and having a common axis (V) of assembly so that they can slide one on the other, **characterized in that** the said fixing means comprise, on one of the two components (10, 20), at least one snap-fastening finger (11, 21') able to snap-fasten into a housing (21, 11') that the other of the two components (10, 20) comprises, and
**in that** the circular seal (30) secured to one of the two components (10, 20), the plane of the circular seal (30) and the axis (V) of assembly describe a non-zero sealing plane angle (α) suited to allowing the circular seal (30) to slide over the other of the two components (10, 20).

2. Assembly (1) according to Claim 1, **characterized in that** each housing (21, 11') forms an end stop for the end of assembly travel.

3. Assembly (1) according to one of Claims 1 and 2, **characterized in that** the sliding surfaces (12, 22) are partially borne by slides (13, 13A, 23, 23A) able to slide in one another along the axis (V) of assembly.

4. Assembly (1) according to Claim 3, **characterized in that** one slide (13, 13A, 23, 23A) is arranged on each side of each opening (15, 25) in the components (10, 20).

5. Assembly (1) according to one of Claims 1 to 4, **characterized in that** the two components (10, 20) comprise markers (16, 26) identifying the end of assembly.

6. Assembly (1) according to one of Claims 1 to 5, **characterized in that** the noise-attenuation device (20) constitutes a resonator (20) and the air duct (10) constitutes one of the ducts of a motor vehicle engine unit air intake line.

7. Assembly (1) according to one of Claims 1 to 5, **characterized in that** the noise-attenuation device (20) constitutes a resonator (20) and the air duct (10) constitutes a plenum (10) of a motor vehicle engine unit air intake line.

## Patentansprüche

1. Anordnung (1) mit zwei Teilen (10, 20), einem Luftkanal (10) eines Kraftfahrzeugs und einer Geräuschdämpfungsvorrichtung (20), die jeweils mit mindestens einer Öffnung (15, 25) zur dichten Verbindung mittels einer ringförmigen Dichtung (30) und zum Zusammenfügen mittels Befestigungsmitteln versehen sind, die an jedem der beiden Teile (10, 20) mindestens eine Gleitfläche (12, 22, 12', 22') aufweisen, wobei die Gleitflächen (12, 22, 12', 22') eben sind und eine gemeinsame Montageachse (V) besitzen, um aufeinander gleiten zu können,
**dadurch gekennzeichnet, dass** die Befestigungsmittel an einem der beiden Teile (10, 20) mindestens einen Rastfinger (11, 21') aufweisen, der in eine an dem anderen der beiden Finger (10, 20) enthaltene Aufnahme (21, 11') einrasten kann, und
dass die ringförmige Dichtung (30), die mit einem der beiden Teile (10, 20) fest verbunden ist, die Ebene der ringförmigen Dichtung (30) und die Montageachse (V) einen Trennebenenwinkel (α) von ungleich null beschreiben, der dazu ausgelegt ist, das Gleiten der ringförmigen Dichtung (30) auf dem anderen der Teile (10, 20) zu gestatten.

2. Anordnung (1) nach Anspruch 1, **dadurch gekennzeichnet, dass** jede Aufnahme (21, 11') einen Montageendanschlag bildet.

3. Anordnung (1) nach einem der Ansprüche 1 und 2, **dadurch gekennzeichnet, dass** die Gleitflächen (12, 22) teilweise von Schlitten (13, 13A, 23, 23A) getragen werden, die entlang den Montageachse (V) ineinander gleiten können.

4. Anordnung (1) nach Anspruch 3, **dadurch gekennzeichnet, dass** ein Schlitten (13, 13A, 23, 23A) auf jeder Seite jeder Öffnung (15, 25) der Teile (10, 20) angeordnet ist.

5. Anordnung (1) nach einem der Ansprüche 1 bis 4, **dadurch gekennzeichnet, dass** die beiden Teile (10, 20) Montageendmarkierungen (16, 26) aufweisen.

6. Anordnung (1) nach einem der Ansprüche 1 bis 5, **dadurch gekennzeichnet, dass** die Geräuschdämpfungsvorrichtung (20) einen Resonator (20) bildet und der Luftkanal (10) eines der Kanäle einer Lufteinlassleitung des Motorblocks des Kraftfahrzeugs bildet.

7. Anordnung (1) nach einem der Ansprüche 1 bis 5, **dadurch gekennzeichnet, dass** die Geräuschdämpfungsvorrichtung (20) einen Resonator (20) bildet und der Luftkanal (10) eine Kammer (10) einer Lufteinlassleitung der Motoreinheit des Kraftfahrzeugs bildet.
